# EUROPEAN PATENT APPLICATION

(11) **EP 4 481 523 A1**
(43) Date of publication of application: **25.12.2024**
(21) Application number: 23180953.4
(22) Date of filing: 22.06.2023
(51) Int. Cl.: G05D 1/00

(54) **MONITORING AN UNDERGROUND WORKING AREA**

(71) Applicant: Sandvik Mining and Construction Oy, 33330 Tampere (FI)
(72) Inventor: Snellman, Olli, 33330 Tampere (FI)
(74) Representative: Sandvik

(57) **Abstract**

Disclosed is a method comprising receiving a first indication from at least one of the one or more mining vehicles operational within the underground working area, wherein the first indication provides information regarding an object hindering operation of the one or more mining vehicles operational within the underground working area, the object having its current location within the underground working area, determining further information relating to the object, the further information comprising at least the current location of the object, providing a second indication to the one or more mining vehicles operational within the underground working area, wherein the second indication comprises information regarding the current location of the object, and receiving, from a mining vehicle, comprised in the one or more mining vehicles operational within the underground working area, a third indication, wherein the third indication provides information regarding the mining vehicle being capable of removing the object from its current location.

## Description

### Field

The present application relates to monitoring an underground working area. More specifically, the present application relates to monitoring if there are objects within the underground working area hindering operation within the underground working area.

### Background

In an underground working area, such as a mine, there may be different types of vehicles operating and the operating area for such vehicles is to be safe. As a part of safety, it is desirable to monitor that there are no unwanted objects within the operating area.

### Brief Description

The scope of protection sought for various embodiments of the invention is set out by the independent claims. The example embodiments and features, if any, described in this specification that do not fall under the scope of the independent claims are to be interpreted as examples useful for understanding various embodiments of the invention.

According to a first aspect there is provided an apparatus comprising means for: receiving a first indication from at least one of the one or more mining vehicles operational within the underground working area, wherein the first indication provides information regarding an object hindering operation of the one or more mining vehicles operational within the underground working area, the object having its current location within the underground working area, determining further information relating to the object, the further information comprising at least the current location of the object, providing a second indication to the one or more mining vehicles operational within the underground working area, wherein the second indication comprises information regarding the current location of the object, and receiving, from a mining vehicle, comprised in the one or more mining vehicles operational within the underground working area, a third indication, wherein the third indication provides information regarding the mining vehicle being capable of removing the object from its current location.

In some exemplary embodiments according to the first aspect, the means comprises at least one processor, and at least one memory, including a computer program code, wherein the at least one memory and the computer program code are configured, with the at least one processor, to cause the performance of the apparatus.

According to a second aspect there is provided an apparatus comprising at least one processor, and at least one memory including a computer program code, wherein the at least one memory and the computer program code are configured, with the at least one processor, to cause the apparatus to: receive a first indication from at least one of the one or more mining vehicles operational within the underground working area, wherein the first indication provides information regarding an object hindering operation of the one or more mining vehicles operational within the underground working area, the object having its current location within the underground working area, determine further information relating to the object, the further information comprising at least the current location of the object, provide a second indication to the one or more mining vehicles operational within the underground working area, wherein the second indication comprises information regarding the current location of the object, and receive, from a mining vehicle, comprised in the one or more mining vehicles operational within the underground working area, a third indication, wherein the third indication provides information regarding the mining vehicle being capable of removing the object from its current location.

According to a third aspect there is provided a method comprising: receiving a first indication from at least one of the one or more mining vehicles operational within the underground working area, wherein the first indication provides information regarding an object hindering operation of the one or more mining vehicles operational within the underground working area, the object having its current location within the underground working area, determining further information relating to the obj ect, the further information comprising at least the current location of the object, providing a second indication to the one or more mining vehicles operational within the underground working area, wherein the second indication comprises information regarding the current location of the object, and receiving, from a mining vehicle, comprised in the one or more mining vehicles operational within the underground working area, a third indication, wherein the third indication provides information regarding the mining vehicle being capable of removing the object from its current location.

In some example embodiments according to the third aspect, the method is a computer-implemented method.

According to a fourth aspect there is provided a computer program comprising instructions for causing an apparatus to perform at least the following: receive a first indication from at least one of the one or more mining vehicles operational within the underground working area, wherein the first indication provides information regarding an object hindering operation of the one or more mining vehicles operational within the underground working area, the object having its current location within the underground working area, determine further information relating to the obj ect, the further information comprising at least the current location of the object, provide a second indication to the one or more mining vehicles operational within the underground working area, wherein the second indication comprises information regarding the current location of the object, and receive, from a mining vehicle, comprised in the one or more mining vehicles operational within the underground working area, a third indication, wherein the third indication provides information regarding the mining vehicle being capable of removing the object from its current location.

According to a fifth aspect there is provided a computer program comprising instructions stored thereon for performing at least the following: receiving a first indication from at least one of the one or more mining vehicles operational within the underground working area, wherein the first indication provides information regarding an object hindering operation of the one or more mining vehicles operational within the underground working area, the object having its current location within the underground working area, determining further information relating to the obj ect, the further information comprising at least the current location of the object, providing a second indication to the one or more mining vehicles operational within the underground working area, wherein the second indication comprises information regarding the current location of the object, and receiving, from a mining vehicle, comprised in the one or more mining vehicles operational within the underground working area, a third indication, wherein the third indication provides information regarding the mining vehicle being capable of removing the object from its current location.

According to a sixth aspect there is provided a non-transitory computer readable medium comprising program instructions for causing an apparatus to perform at least the following: receive a first indication from at least one of the one or more mining vehicles operational within the underground working area, wherein the first indication provides information regarding an object hindering operation of the one or more mining vehicles operational within the underground working area, the object having its current location within the underground working area, determine further information relating to the object, the further information comprising at least the current location of the object, provide a second indication to the one or more mining vehicles operational within the underground working area, wherein the second indication comprises information regarding the current location of the object, and receive, from a mining vehicle, comprised in the one or more mining vehicles operational within the underground working area, a third indication, wherein the third indication provides information regarding the mining vehicle being capable of removing the object from its current location.

According to a seventh aspect there is provided a non-transitory computer readable medium comprising program instructions stored thereon for performing at least the following: receiving a first indication from at least one of the one or more mining vehicles operational within the underground working area, wherein the first indication provides information regarding an object hindering operation of the one or more mining vehicles operational within the underground working area, the object having its current location within the underground working area, determining further information relating to the object, the further information comprising at least the current location of the object, providing a second indication to the one or more mining vehicles operational within the underground working area, wherein the second indication comprises information regarding the current location of the object, and receiving, from a mining vehicle, comprised in the one or more mining vehicles operational within the underground working area, a third indication, wherein the third indication provides information regarding the mining vehicle being capable of removing the object from its current location.

According to an eighth aspect there is provided an apparatus comprising means for: receiving a fifth indication, wherein the fifth indication provides information regarding an object hindering operation of the one or more mining vehicles operational within the underground working area, the object being located within the underground working area, receiving further information regarding the object, the further information comprising at least the current location of the object, determining, based at least partly on the current location of the object, that the mining vehicle is capable of removing the object from its current location, providing a sixth indication to the monitoring system, wherein the sixth indication provides information regarding the mining vehicle being capable of removing the object from its current location, and performing removal of the object from its current location.

In some exemplary embodiments according to the eighth aspect, the means comprises at least one processor, and at least one memory, including a computer program code, wherein the at least one memory and the computer program code are configured, with the at least one processor, to cause the performance of the apparatus.

According to a ninth aspect there is provided an apparatus comprising at least one processor, and at least one memory including a computer program code, wherein the at least one memory and the computer program code are configured, with the at least one processor, to cause the apparatus to: receive a fifth indication, wherein the fifth indication provides information regarding an object hindering operation of the one or more mining vehicles operational within the underground working area, the object being located within the underground working area, receive further information regarding the object, the further information comprising at least the current location of the object, determine, based at least partly on the current location of the object, that the mining vehicle is capable of removing the object from its current location, provide a sixth indication to the monitoring system, wherein the sixth indication provides information regarding the mining vehicle being capable of removing the object from its current location, and perform removal of the object from its current location.

According to a tenth aspect there is provided a method comprising: receiving a fifth indication, wherein the fifth indication provides information regarding an object hindering operation of the one or more mining vehicles operational within the underground working area, the object being located within the underground working area, receiving further information regarding the object, the further information comprising at least the current location of the object, determining, based at least partly on the current location of the object, that the mining vehicle is capable of removing the object from its current location, providing a sixth indication to the monitoring system, wherein the sixth indication provides information regarding the mining vehicle being capable of removing the object from its current location, and performing removal of the object from its current location.

In some example embodiments according to the tenth aspect, the method is a computer-implemented method.

According to an eleventeenth aspect there is provided a computer program comprising instructions for causing an apparatus to perform at least the following: receive a fifth indication, wherein the fifth indication provides information regarding an object hindering operation of the one or more mining vehicles operational within the underground working area, the object being located within the underground working area, receive further information regarding the object, the further information comprising at least the current location of the object, determine, based at least partly on the current location of the object, that the mining vehicle is capable of removing the object from its current location, provide a sixth indication to the monitoring system, wherein the sixth indication provides information regarding the mining vehicle being capable of removing the object from its current location, and perform removal of the object from its current location.

According to a twelfth aspect there is provided a computer program comprising instructions stored thereon for performing at least the following: receiving a fifth indication, wherein the fifth indication provides information regarding an object hindering operation of the one or more mining vehicles operational within the underground working area, the object being located within the underground working area, receiving further information regarding the object, the further information comprising at least the current location of the object, determining, based at least partly on the current location of the object, that the mining vehicle is capable of removing the object from its current location, providing a sixth indication to the monitoring system, wherein the sixth indication provides information regarding the mining vehicle being capable of removing the object from its current location, and performing removal of the object from its current location.

According to a thirteenth aspect there is provided a non-transitory computer readable medium comprising program instructions for causing an apparatus to perform at least the following: receive a fifth indication, wherein the fifth indication provides information regarding an object hindering operation of the one or more mining vehicles operational within the underground working area, the object being located within the underground working area, receive further information regarding the object, the further information comprising at least the current location of the object, determine, based at least partly on the current location of the object, that the mining vehicle is capable of removing the object from its current location, provide a sixth indication to the monitoring system, wherein the sixth indication provides information regarding the mining vehicle being capable of removing the object from its current location, and perform removal of the object from its current location.

According to a fourteenth aspect there is provided a non-transitory computer readable medium comprising program instructions stored thereon for performing at least the following: receiving a fifth indication, wherein the fifth indication provides information regarding an object hindering operation of the one or more mining vehicles operational within the underground working area, the object being located within the underground working area, receiving further information regarding the object, the further information comprising at least the current location of the object, determining, based at least partly on the current location of the object, that the mining vehicle is capable of removing the object from its current location, providing a sixth indication to the monitoring system, wherein the sixth indication provides information regarding the mining vehicle being capable of removing the object from its current location, and performing removal of the object from its current location.

### List of Drawings

In the following, the invention will be described in greater detail with reference to the embodiments and the accompanying drawings, in which
FIG. 1 illustrates an example embodiment of an underground working area.
FIG. 2A illustrates an example embodiment of a method that may be performed by a monitoring system.
FIG. 2B illustrates an example embodiment of a method that may be performed by a control unit of a mining vehicle.
FIG. 3 illustrates an example embodiment of removing an object from an underground working area.
FIG. 4 illustrates another example embodiment of removing an object from an underground working area.
FIG. 5A illustrates a signalling chart according to an example embodiment.
FIG. 5B illustrates another signalling chart according to an example embodiment.
FIG. 6 illustrates an example embodiment of an apparatus.

### Description of Embodiments

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

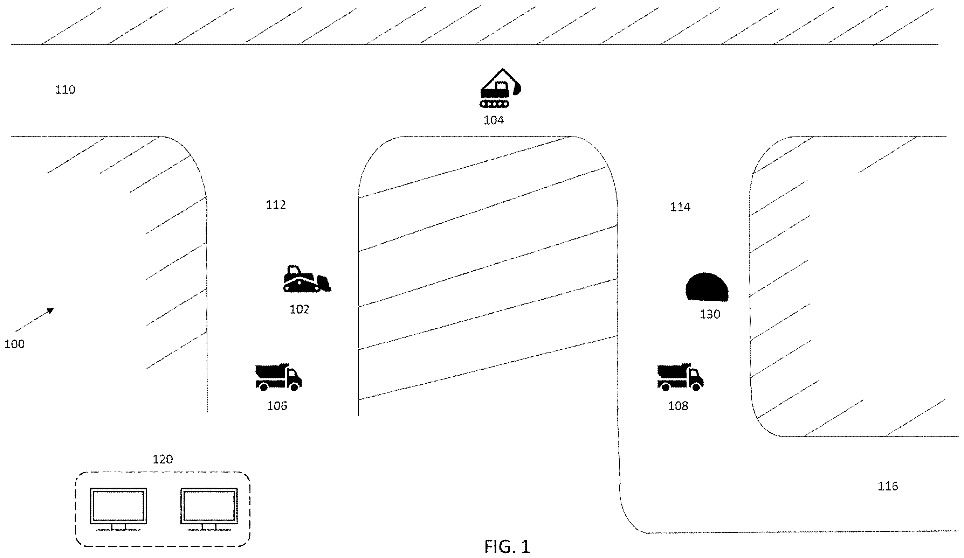

FIG. 1 illustrates an example embodiment of an underground working area 100 such as a mine. It is to be noted that the underground working area 100 illustrated in FIG. 1 is a simplified presentation for the purpose of explanation and that the underground working area 100 may be larger than the part illustrated in FIG. 1. The underground working area 100 comprises tunnels such as tunnels 110, 112, 114 and 116 illustrated in FIG. 1. The tunnels may be large enough to facilitate operation of various work machines such as trucks, bulldozers, dumpers, vans, rock drilling or milling rigs, gantry cranes, mobile reinforcement machines, mechanical cutting machines and loaders or any other kind of work machines suitable for performing an operation within the underground working area 100. Work machines that proceed from one place to another in a mine may be understood as mining vehicles. In this example embodiment, there are mining vehicles 102, 104, 106 and 108. The mining vehicles 102, 104, 106 and 108 may be automated mining vehicles that can be operated without a driver, or they may be driven by a driver.

Optionally, the underground working area 100 may comprise areas that are reserved for such work machines that are operated automatically. Such an area may be called as an automated working area. In an automated working area, due to safety reasons, it may be that no personnel are allowed to be within, or enter, the automated working area when the automated work machines are operating. Monitoring that there are no personnel within, or entering, the automated working area may be performed using any suitable method. Further optionally, the mining vehicles 102, 104, 106 and 108 may have a limited area within the underground working area 100 within which they are allowed to operate.

In this example embodiment the mining vehicles 102, 104, 106 and 108 each comprise a control unit that is connected to a monitoring system 120. The connection may be a wireless connection such as a Wi-Fi based connection. The control unit may be configured to monitor operations of its respective mining vehicle and to provide instructions regarding operations performed by its respective mining vehicle. The monitoring system 120 may be understood as a supervisory system configured to allow a user, who is located for example in a monitoring room of the mining area, to monitor and control overall operations of the underground working area 100. For example, the monitoring system may be configured to allow the user to see on one or more displays data obtained from various sensors that are located within the underground working area 100 and to also provide controlling instructions to work machines within the working area 100. Using the data obtained from various sensors within the working area 100, the operating system may for example receive information that there is an unwanted object 130 located in the tunnel 114. If the object 130 is considered as a hindering object, it may for example be a rock that is large enough to cause damage to the mining vehicle 108 when the mining vehicle 108 proceeds within the tunnel 114 towards the object 130. Thus, it is desirable to be aware that there is such a hindering object 130 that may cause damage such that the damage may be prevented. If such damage occurs, the operation of the mine may need to be halted until the damage is fixed, which is expensive and causes unwanted delays. It is to be noted though that there may also be other types of hindering objects that may be detected and determined to be such objects that are to be moved from their current location. For example, there may be a pipe that is not supposed to be in the tunnel but has for some reason fallen, or the working area 100 may be dedicated for automated operations and it is detected that there is a truck with a driver within the working area 100.

A map of the working area 100 may be stored by the monitoring system 120 and by the control units of the mining vehicles 102, 104, 106 and 108. The monitoring system 120 may be configured to keep the map updated and to provide any updates to the map to the control units of the mining vehicles 102, 104, 106 and 108. Therefore, if the monitoring system receives information that there is the unwanted object 130 in the tunnel 114, the monitoring system may then determine characteristics of the object 130 and provide an update to the map of the working area 100 accordingly and provide the updated map to the control units. The monitoring system 120 may be configured to provide data regarding the working area 100 as output to a user and also take input from the user such that the operations within the working area 100 may be controlled by the monitoring system 120. Further, the monitoring system 120 may be configured to determine what is to be done regarding the object 130 and communicate instructions accordingly to one or more control units of the mining vehicles 102, 104, 106 and 108.

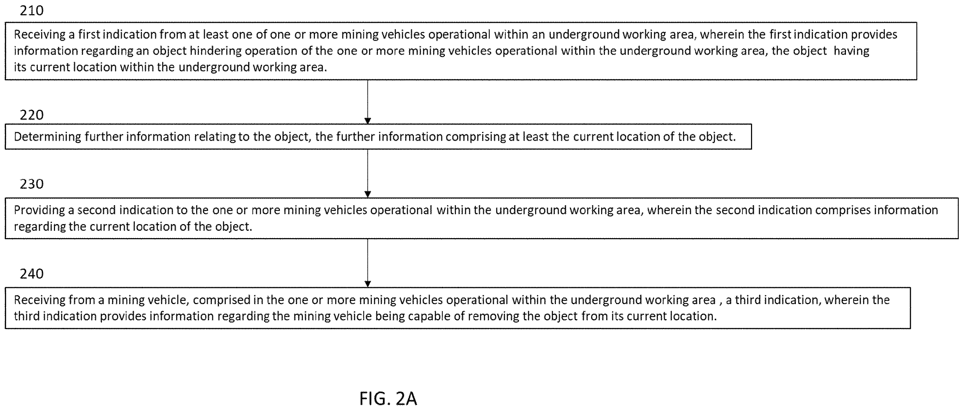

FIG. 2A illustrates an example embodiment of a method that may be performed by a monitoring system. In the example of FIG. 2A, the method is a computer implemented method. In this example embodiment, in block 210, a first indication is received from at least one of one or more mining vehicles operational within an underground working area, wherein the first indication provides information regarding an object hindering operation of the one or more mining vehicles operational within the underground working area, the object having its current location within the underground working area. As the object is an object that hinders operation of the one or more mining vehicles, in some example embodiments, the object is to be removed from its current location. The object may be any physical object that has been, or can be, determined as an object that hinders operation of the one or more mining vehicles 102, 104, 106, 108 within the underground working area 100. For example, the object may be an obstacle such as a rock that may cause damage to a mining vehicle. For such an object, threshold dimensions may be pre-determined to enable identification of such a rock that can cause damage. A small rock for example might not cause any disturbances or damages and may thus be allowed to remain in its current location. As another example, the object may be for example a tool that is not supposed to be in its current location. For example, if maintenance work has been performed previously at or around the current location of the object, a tool may have been accidentally left behind. As a further example, the object may be a barrel or a pipe that for some reason is in its current location although it is not supposed to be there. For example, the barrel or pipe may have accidentally dropped off from another vehicle that has driven by the location previously. As a further example, the object may be for example a truck with a driver while the underground working area is dedicated for automated mining vehicles and thus, a vehicle with a driver is not supposed to be there. For example, the underground working area may have been previously dedicated for such usage that the truck with the driver were allowed to be in the underground working area. Later on, the underground working area may have been assigned to the automated mining vehicles by dedicating the underground working area to be an automated working area.

The first indication may be received from a mining vehicle that is located within the underground working area. The mining vehicle may be part of the one or more mining vehicles operational within the underground working area. Alternatively, the first indication may be received from one or more device comprising sensors that are configured to sense the environment such that they can detect the object. For example, a sensing device may be comprised in a mining vehicle, or it may be comprised in elsewhere within the underground working area. The sensing device may be for example a three-dimensional (3D) sensing device that is configured to provide data that allows a 3D illustration of a target to be obtained. Examples of such 3D sensing devices comprise a light detection and ranging sensor (lidar), a radio detection and ranging (radar) and a sensing device using ultrasound waves to provide data of a target. A lidar sensor is configured to determine a range by targeting an object with a laser and measuring the time for the reflected light to return to the receiver. A radar sensor is configured to transmit electromagnetic energy toward objects and observing the echoes returned from them. A sensing device may also be a camera such as a time-of-flight (ToF) camera configured to determine a distance between the camera and a subject by measuring a round trip time of an artificial light signal provided by a laser or a light-emitting diode (LED). Based on the sensing data received, a mining vehicle or a monitoring system configured to monitor the underground working area may be configured to receive an indication of the object. In case the mining vehicle receives the first indication, it may subsequently provide the indication to the monitoring system and/or to other mining vehicle within the underground operating area.

Next, in block 220, further information regarding the object is determined and the further information comprises at least the current location of the object. The location may be determined in any suitable manner. The first indication that is received and which indicated the object, may also indicate a more precise location of the object and thus the determining of the location of the object may be determined from the indication. Alternatively, the first indication may be used as a basis for determining a more precise location of the object, in other words, to determine the current location of the object more precisely using the received first indication as an input for the determination and, optionally, also other suitable input may be used to determine the more precise location of the object.

In some example embodiments, the location may be determined by comparing sensing data, such as a point cloud, to reference data, such as a model of a tunnel from which the sensing data is obtained. The sensing data is associated with the object. For example, the sensing data may comprise a representation of the object, or a part of the object in the form of for example a point cloud. A point cloud may comprise a plurality of data points representing, for example, distances between the mobile mining vehicle and objects in the environment of the mobile mining vehicle at a particular time instance. An individual point included in a point cloud may be presented by, for example, X and Y coordinates, or X, Y and Z coordinates with respect to a particular coordinate frame. Thus, by comparing an obtained point cloud to a reference model, the location of the object may be determined.

The further information may comprise also other information such as a classification of the object. For example, there may be pre-determined classifications for different types of objects. Thus, based on the indications received regarding the object, the correct classification for the object may be determined. It is to be noted that the classification may be based on any suitable object recognition method and, optionally, machine learning may also be utilized for the classification. The further information may be determined for example by the monitoring system or by a control unit comprised in the mining vehicle, or a combination of both.

Once the further information has been determined, then in block 230 a second indication is provided to one or more mining vehicles and the second indication comprises information regarding the object and the current location of the object. The second indication may be provided based on the first indication and the further indication. The further indication may be determined by the mining vehicle, or by the monitoring system, or by a combination of both. The second indication comprising the further information may be provided to the one or more mining vehicles, or to some other mining vehicle(s), or to a combination of both.

The first indication provides the information regarding the object, and in some example embodiments, the information regarding the object additionally comprises the further information. This may be the case for example if the further information is determined by the mining vehicle. If, on the other hand, the further information is determined by the monitoring system, and the sensing device, that was used to detect the object is comprised in the mining vehicle, the second indication may be provided to the mining vehicle by the monitoring system. The mining vehicle in this example embodiment is comprised in the one or more mining vehicles. Additionally, in some other example embodiments, the second indication may be provided to a mining vehicle that is not comprised in the one or more mining vehicles. Alternatively, or additionally, if the further information was determined by the mining vehicle comprising the sensing device, the further information may be provided, by the mining vehicle comprising the sensing device, to the other mining vehicles provided that the one or more mining vehicles comprises a plurality of mining vehicles. In such a case, the mining vehicle comprising the sensing device may additionally provide the second indication to the monitoring system.

Optionally, the monitoring system may be configured to update the map of the underground working area in accordance with the current location of the object. Further optionally, the update may comprise any other further information determined such as the classification of the object, in case it has been determined, as well as any other additional information regarding the object. The updated map may then be provided to the mining vehicles that are associated with the underground working area.

Finally, in block 240, a third indication is received from a mining vehicle comprised in the one or more of mining vehicles, wherein the third indication provides information that the mining vehicle, from which it was received, is capable of removing the object from its current location. In some example embodiments, based on this information, it may be determined if the mining vehicle is allowed to remove the object from its current location or not and if it is, an indication providing information that the mining vehicle is allowed to remove the object from its current location may be provided to the mining vehicle. For example, the determination may be performed responsive to the third indication comprising a request for an acceptance with respect to performing an action regarding the object. For example, the mining vehicle may be capable of removing the object from its current location and therefore requests the acceptance. The action may thus be the removal of the object or alternatively, some other action such as obtaining further information or providing a request to another mining device to perform the action regarding the object. The third indication may be received by the monitoring system, or it may be received by the mining vehicle comprising the sensing device.

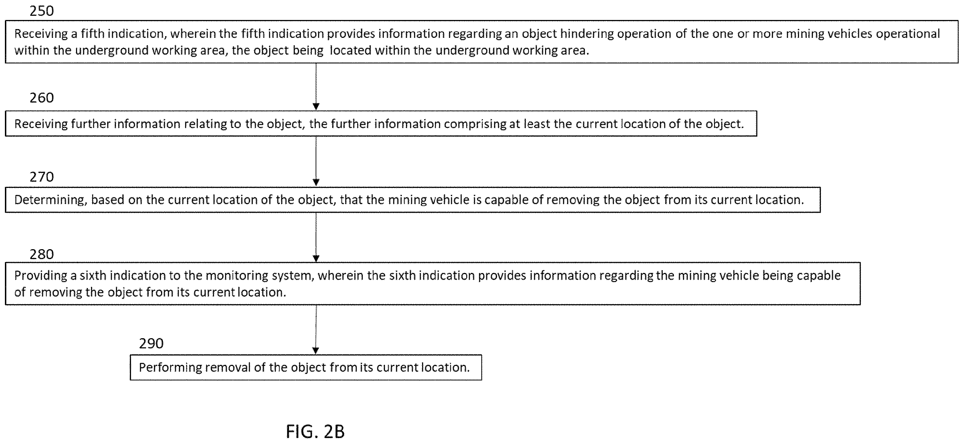

FIG. 2B illustrates another method of an example embodiment that may be performed by a control unit of a mining vehicle. In the example of FIG. 2B the method is a computer-implemented method. In this example embodiment, in block 250 a fifth indication is received. Although the fifth indication is the first indication in this example embodiment, to avoid confusing the first indication discussed in the example embodiment of FIG. 2A, this indication is referred to as the fifth indication to highlight that the fifth indication might not completely correspond to the first indication introduced in the example embodiment of FIG. 2A. The fifth indication provides information regarding an object hindering operation of the one or more mining vehicles operational within the underground working area, the object being located within the underground working area. The fifth indication may be received by a mining vehicle that is associated with the underground working area. The association may be for example that the mining vehicle is allowed to operate within the automated working area and/or that the mining vehicle is located within the underground working area. The fifth indication may be received from a monitoring system configured to monitor the underground working area or from another mining vehicle that is located within the underground working area. Alternatively, or additionally, the fifth indication may be received, by the control unit of the mining vehicle, from a sensing device comprised in, or connected to, the mining vehicle. The fifth indication may optionally comprise an updated version of a map of the underground working area.

In block 260, further information relating to the object, the further information comprising at least the current location of the object is received. The further information may be received by the mining vehicle, and it may be received from the monitoring system or from the other mining vehicle. The further information may comprise, in addition to the current location of the object, other information regarding the object, for example a classification of the object and/or image data from the environment around the object.

Next, in block 270, it is determined, based at least partly on the current location of the object, that the mining vehicle is capable of removing the object from its current location. For example, the mining vehicle may determine that it is capable of lifting the object and then transporting the object to another location. Alternatively, the mining vehicle may determine that it is capable of pushing the object elsewhere or that the mining vehicle may be used to transport a user to the location of the object and the user can thus remove the object. Such determination may be performed based on determining that the operating area of the mining vehicle comprises the location of the object. Additionally, the determination may be based on one or more characteristics of the mining vehicle. A characteristic of the mining vehicle may comprise, for example, a structural characteristic and/or an operational characteristic. A structural characteristic may comprise, for example, a type of the mining vehicle or dimensions of the mining vehicle. For example, the type of the mining vehicle may indicate that the mining vehicle is a front-end loader or a wheel loader capable of removing the object. As another example, the dimensions of the mining vehicle may indicate whether the size and/or mass of the mining vehicle is enough for removing the object. An operational characteristic may comprise, for example, an operating mode of the mining vehicle, such as manual or automated, an operating area of the mining vehicle, a task being performed by the mining vehicle, etc. For example, it is may be determined that the object is too far with respect to the operating area of the mining vehicle and thus the removal of the object is not suitable for being performed by the mining vehicle or vice versa. As another example, the mining vehicle may be engaged in performing another task that cannot be interrupted and thus the removal of the object is not suitable for being performed by the mining vehicle or vice versa.

In block 280, a sixth indication is provided to the monitoring system and the sixth indication provides information regarding the mining vehicle being capable of removing the object from its current location. Additionally, the sixth indication may also comprise a request for receiving an acceptance from the monitoring system to remove the object from its current location.

Finally, in block 290, removal of the object is performed. The removal may be performed by the mining vehicle. In case the second indication comprised the request for receiving the acceptance to remove the object, the removal may be performed in response to receiving the acceptance.

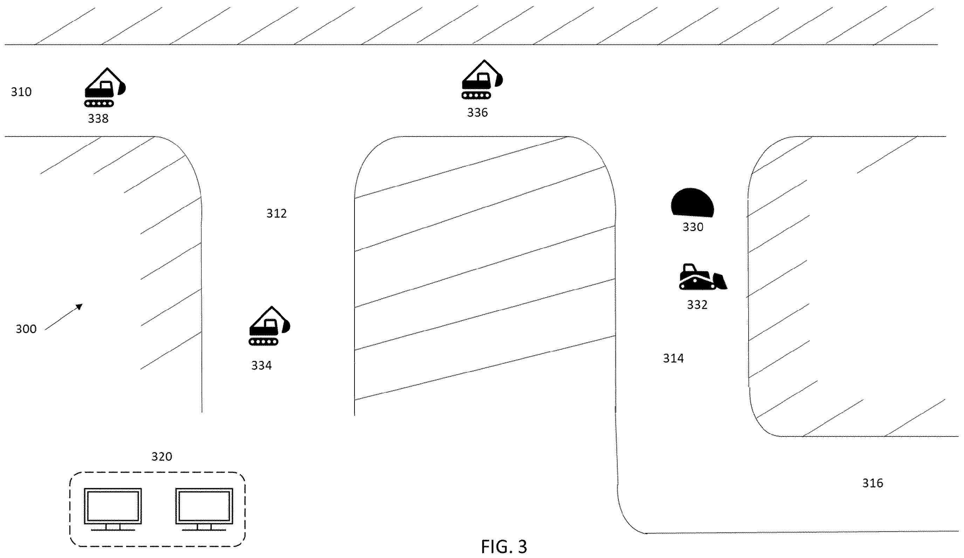

FIG. 3 illustrates an example embodiment of removing an object from an underground working area 300, which is comprised in a mine. In this example embodiment, there are tunnels 310, 312, 314 and 316 comprised in the underground working area 300. The underground working area is monitored by a monitoring system 320, which may correspond to the monitoring system 120 illustrated in FIG. 1. In this example embodiment, there are mining vehicles 332, 334, 336 and 338 operating within the underground working area 300 and they are connected, using a wireless connection, to the monitoring system 320. The connection may be implemented by a control unit comprised in the mining vehicle. Optionally, the mining vehicles 332, 334, 336 and 338 may additionally be capable of connecting to each other using a wireless connection and thus transmit data between each other.

Additionally, one or more of the mining vehicles 332, 334, 336 and 338 may comprise a 3D sensing device and/or a camera. The 3D sensing device may be for example a lidar although any other suitable 3D sensing device could be used. The camera may be configured to provide visual data, such as still and/or video images, and the visual data may be used as such or as additional data to the 3D sensing data obtained using the 3D sensing device.

In this example embodiment, the mining vehicle 332 operates in the tunnel 314 and thus, as it moves along the tunnel 314, it detects an object 330. The object 330 may be detected by a 3D sensing device comprised in the mining vehicle 332. Optionally, the control unit of the mining vehicle 332 may be configured to process the sensing data received from the 3D sensing device such that unless the dimensions of the object 330 are greater than a pre-determined threshold values, no indication of a detected object is provided. If the pre-determined threshold values are exceeded, then an indication may be provided that the object 330 is detected. The control unit may be configured to determine, upon detecting the object 330, that at the location of the object 330 there should not be any objects. Such knowledge may be based on the map of the working area 300 that is stored to the control unit of the mining vehicle 332, or alternatively, or additionally, the knowledge may be based on history data of the tunnel 314 and determining that the object 330 was not there previously. The control unit may then determine that as the object is at a location in which there should not be any objects, the object 330 is to be removed from its current location.

The mining vehicle 332 may be configured to provide an indication to the monitoring system 320 and/or to the mining vehicles 334, 336 and 338 that the object 330 has been detected and it is to be removed from its current location. Along with the indication, the mining vehicle 332 may be configured to transmit sensing data obtained from the 3D sensing device it comprises and optionally also camera data from around the detected object 330. Further information regarding the object, such as its current location and optionally also a classification of the object, may then be determined either by the mining vehicle 332 or by the monitoring system 320. If the further information is determined by the mining vehicle 332, the further information may be provided to the monitoring system 320 and optionally also to the other mining vehicles 334, 336 and 338. Alternatively, the further information may be determined by the monitoring system 320.

The monitoring system 320 may be configured to update the map of the underground working area 300 to comprise the further information. The updated map is then provided to the mining vehicles 332, 334, 336 and 338 along with indicating that the obstacle 330 is to be removed from its current location. In this example embodiment, the mining vehicle 332 determines that it is not capable of removing the obstacle and it may indicate this to the monitoring system 320. The mining vehicle 334 may determine that it would be capable of removing the object 330 from its current location, but that its operating area is the tunnel 312 and thus it is not suited for removing the object unless it is allowed to perform an action related to the removal of the object, which in this example embodiment is to leave its operating area and enter the tunnel 314 to remove the object 330 from its current location. The mining vehicle 334 may indicate this to the operating system 320. The mining vehicle 336 may determine that it is capable of removing the object 330 from its current location and that the tunnel 314 is within its operating area. The mining vehicle 338 may also determine that it is capable of removing the object 330 from its current location and that the tunnel 314 is within its operating area. As such, the mining vehicles 336 and 338 indicate this to the monitoring system 320.

The monitoring system 320 then determines that the mining vehicle 336 is closest to the obstacle 330 and that it does not have to enter another operating area. The monitoring system 320 thus determines that the mining vehicle 336 is accepted to perform the action regarding the removal of the object 330, which in this case comprises removal of the object 330. The monitoring system 320 thus provides the acceptance to the mining vehicle 336, which in response to the acceptance performs the removal of the object 330. After performing the removal of the object 330, the mining vehicle 336 may provide to the monitoring system 320 an indication that the removal is completed and the monitoring system may update the map of the underground working area 300 accordingly.

As the mining vehicle 336 is to remove the object 330, the monitoring system 320 may reject the requests for acceptance of the mining vehicles 334 and 338 to perform actions regarding removal of the object 330.

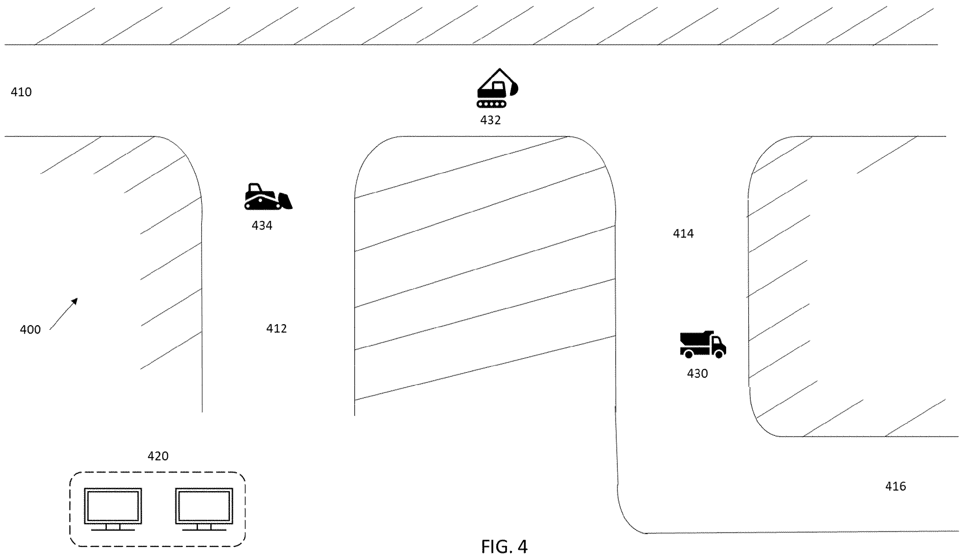

FIG. 4 illustrates another example embodiment of removing an object from an underground working area 400, which is comprised in a mine. In this example embodiment, there are tunnels 410, 412, 414 and 416 comprised in the underground working area 400. The underground working area is monitored by a monitoring system 420, which may correspond to the monitoring system 120 illustrated in FIG. 1. In this example embodiment, there are mining vehicles 432 and 434 operating within the underground working area 400 and they are connected, using a wireless connection to the monitoring system 420. The connection may be implemented by a control unit comprised in the mining vehicle. Optionally, the mining vehicles 432 and 434 may additionally be capable of connecting to each other using a wireless connection and thus transmit data between each other. In this example embodiment, the mining vehicles 432 and 434 are automated mining vehicles and the tunnels 410, 412 and 414 are dedicated to automated mining vehicles and thus, no vehicles with a driver are to be located within the tunnels 410, 412 and 414.

In this example embodiment, there is a 3D sensing device and/or a camera located within the tunnel 414 such that the monitoring system 420 may obtain sensing data from the 3D sensing device. The 3D sensing device may be for example a lidar although any other suitable 3D sensing device could be used. The camera may provide still or video images and may be used as such or as additional data to the 3D sensing data obtained using the 3D sensing device.

In this example embodiment, the truck 430 with a driver in it may be detected as an object by the 3D sensing device comprised in the tunnel 414. The monitoring system 420 may then use the sensing data received from the 3D sensing device such that it determines the dimensions of the truck 430 to be greater than a pre-determined threshold value, and thus determines that it has received an indication regarding an obstacle being detected and that the object is to be removed from its current location. The control unit may, upon detecting the object 330, determine that the at the location of the object 330 there should not be any objects and as such the object 430 is to be removed from its current location. The monitoring system 420 may then determine that the object 330 is a truck with a driver using image recognition for example. As a consequence, the monitoring system 420 may then provide an indication to the mining vehicles 432 and 434 that they are not to enter the tunnel 414 and the monitoring system may indicate to the truck 430 that it is to leave the tunnel 414. In this example embodiment, the tunnel 416 leads away from the area dedicated for the automated mining vehicles and as such the truck may indicate its capability to remove itself from the current location to the monitoring system 420. In other words, the truck may indicate that it can be driven along the tunnel 416 away from the area dedicated to the automated mining vehicles. The monitoring system 420 may accept the removal of the truck 430 by the driver and then detect when the truck 430 has left the tunnel 414 and the inform the mining vehicles 432 and 434 that it is safe to enter the tunnel 414 again.

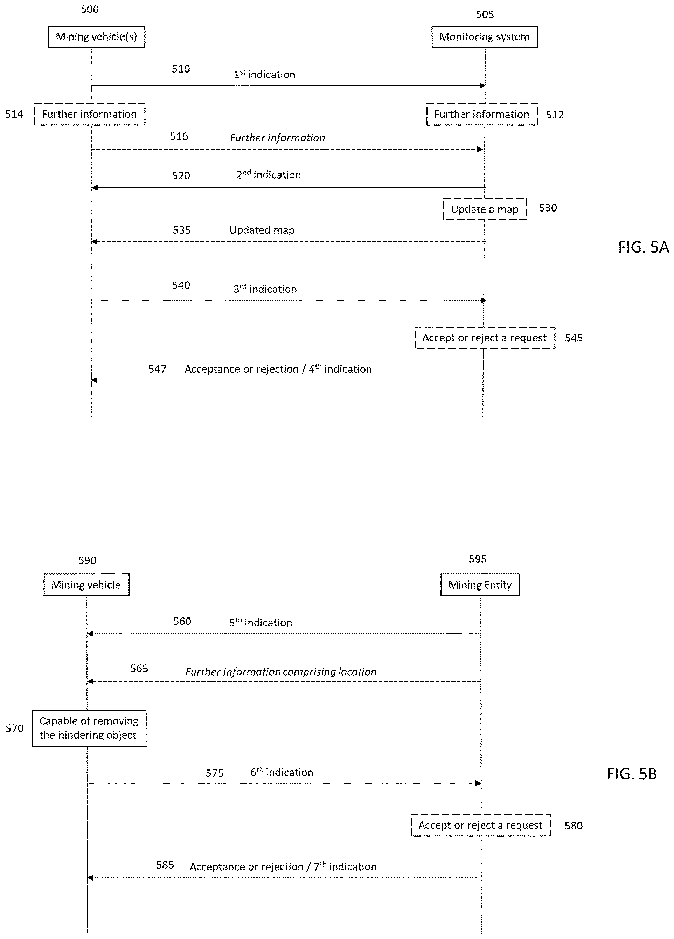

FIG. 5A illustrates a signalling chart according to an example embodiment. In this example embodiment there are one or more mining vehicles 500 that are operational within an underground working area and a monitoring system 505 that is configured to perform monitoring of the underground working area. The one or more mining vehicles 500 and the monitoring system 505 capable of connecting to each other for example using a wireless connection to transmit signals that carry data such as indications and information. In this example embodiment one of the one or more mining vehicles 500 transmits a first indication 510 that provides information regarding an object hindering operation of the one or more mining vehicles operational within the underground working area, the object having its current location within the underground working area. The indication 510 is transmitted to the monitoring system 505. The monitoring system 505 may then, based on the received indication 510, determine further information relating to the object, as illustrated by block 512, the further information comprising at least the current location of the object. Alternatively, or additionally, at least one of the one or more mining vehicles 500 may determine the further information as illustrated in block 514. If further information is determined, at least partly, by the one or more mining vehicles 500, then the further information may be transmitted to the monitoring system as part of the first indication 510 or alternatively, or additionally, as a separate indication 516.

The monitoring system 505 then transmits a second indication to the one or more mining vehicles operational within the underground working area, wherein the second indication 520 comprises information regarding the current location of the object. Optionally, based at least partly on the further information, the monitoring system 505 may then update a map illustrating the underground working area as illustrated in block 530. The updated map may then be transmitted to at least one of the one or more mining vehicles 500 as illustrated by signaling 535.

Next, the monitoring system 505 receives from at least one of the one or more mining vehicles a third indication 540, wherein the third indication 540 provides information regarding the mining vehicle being capable of removing the object from its current location. The third indication 540 may optionally comprise a request for performing removing of the object. The monitoring system 505 may then determine if the request is accepted or rejected as illustrated in block 545. In case the request is received from multiple mining vehicles, then the monitoring system 505 may determine which mining vehicle is such that its request may be accepted. The monitoring system then transmits a fourth indication 547, which is an optional indication, to indicate acceptance or rejection to each such mining vehicle 500 from which the monitoring system received the third indication 540.

FIG. 5B illustrates another signalling chart according to an example embodiment. In this example embodiment there is a mining vehicle 590 operational in an underground working area and a mining entity 595. The mining entity may be for example a monitoring system, such as the monitoring system 505 or another mining vehicle operational within the underground working area, or a combination of both, in which case the mining vehicle 595 may receive data from and transmit data to both of them. The mining vehicle 590 and the mining entity 595 are connected to each other using any suitable connectivity such as wireless connectivity. In this example embodiment, the mining vehicle 590 receives a fifth indication 560 from the mining entity 595. The fifth indication 595 provides information regarding an object hindering operation of the one or more mining vehicles operational within the underground working area, the object being located within the underground working area. Along with the fifth indication, or as a separate indication 565, the mining vehicle 590 may receive further information from the mining entity 595. The further information comprises at least the current location of the object. Then, as illustrated in block 570, the mining vehicle 590 may determine, based at least partly on the current location of the object, that the mining vehicle 590 is capable of removing the object from its current location. Then, the mining vehicle 590 transmits a sixth indication 575 to the mining entity 595. The sixth indication 575 provides information regarding the mining vehicle being capable of removing the object from its current location. If the mining entity 595 is a monitoring system, it may then, optionally, determine if the request is accepted or rejected as illustrated by block 580. The mining vehicle 590 then receives form the mining entity 595 a seventh indication 585 that indicates either acceptance or rejection of the request.

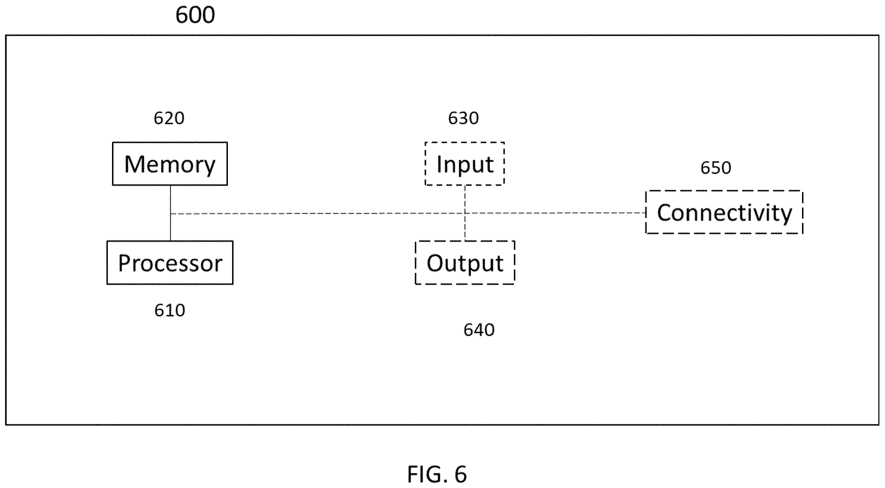

FIG. 6 illustrates an example embodiment of an apparatus 600, which may be an apparatus comprised in another device such as a control unit comprised in a monitoring system, or in a control unit of a work machine. The apparatus 600 comprises a processor 610. The processor 610 is configured to interpret computer program instructions and process data. The processor 610 may comprise one or more programmable processors. The processor 610 may comprise programmable hardware with embedded firmware and may, alternatively or additionally, comprise one or more application specific integrated circuits, ASICs.

The processor 610 is coupled to a memory 620. The processor is configured to read and write data to and from the memory 620. The memory 620 may comprise one or more memory units. The memory units may be volatile or non-volatile. It is to be noted that in some example embodiments there may be one or more units of non-volatile memory and one or more units of volatile memory or, alternatively, one or more units of non-volatile memory, or, alternatively, one or more units of volatile memory. Volatile memory may be for example RAM, DRAM or SDRAM. Non-volatile memory may be for example ROM, PROM, EEPROM, flash memory, optical storage or magnetic storage. In general, memories may be referred to as non-transitory computer readable media. The memory 620 stores computer readable instructions that are execute by the processor 610. For example, non-volatile memory stores the computer readable instructions and the processor 610 executes the instructions using volatile memory for temporary storage of data and/or instructions.

The computer readable instructions may have been pre-stored to the memory 620 or, alternatively or additionally, they may be received, by the apparatus, via electromagnetic carrier signal and/or may be copied from a physical entity such as computer program product. Execution of the computer readable instructions causes the apparatus 600 to perform functionality described above.

In the context of this document, a "memory" or "computer-readable media" may be any non-transitory media or means that can contain, store, communicate, propagate or transport the instructions for use by or in connection with an instruction execution system, apparatus, or device, such as a computer.

The apparatus 600 is, in some example embodiments, configured to, with the at least one processor, the at least one memory and the computer program code, cause the apparatus to receive a first indication from at least one of the one or more mining vehicles operational within the underground working area, wherein the first indication provides information regarding an object hindering operation of the one or more mining vehicles operational within the underground working area, the object having its current location within the underground working area. Also, the apparatus 600 is configured to, with the at least one processor, the at least one memory and the computer program code, cause the apparatus to determine further information relating to the object, the further information comprising at least the current location of the object. Also, the apparatus 600 is configured to, with the at least one processor, the at least one memory and the computer program code, cause the apparatus to provide a second indication to the one or more mining vehicles operational within the underground working area, wherein the second indication comprises information regarding the object and its current location. Also, the apparatus 600 is configured to, with the at least one processor, the at least one memory and the computer program code, cause the apparatus to receive, from a mining vehicle operational within the underground working area, comprised in the one or more mining vehicles, a third indication, wherein the third indication provides information regarding the mining vehicle being capable of removing the object from its current location.

The apparatus 600 is, in some example embodiments, configured to, with the at least one processor, the at least one memory and the computer program code, cause the apparatus to receive a fifth indication, wherein the fifth indication provides information regarding an object hindering operation of the one or more mining vehicles operational within the underground working area, the object being located within the underground working area. Also, the apparatus 600 is configured to, with the at least one processor, the at least one memory and the computer program code, cause the apparatus to receive further information regarding the object, the further information comprising at least the current location of the object. Also, the apparatus 600 is configured to, with the at least one processor, the at least one memory and the computer program code, cause the apparatus to determine, based at least partly on the current location of the object, that the mining vehicle is capable of removing the object from its current location. Also, the apparatus 600 is configured to, with the at least one processor, the at least one memory and the computer program code, cause the apparatus to provide a sixth indication to the monitoring system, wherein the sixth indication provides information regarding the mining vehicle being capable of removing the object from its current location. Also, the apparatus 600 is configured to, with the at least one processor, the at least one memory and the computer program code, cause the apparatus to perform removal of the object from its current location.

The apparatus 600 optionally further comprises, or is connected to, an input unit 630.

The input unit 630 comprises one or more interfaces for receiving input such as a user input or input from another device. The one or more interfaces may comprise for example one or more motion and/or orientation sensors, one or more cameras, one or more accelerometers, one or more microphones, one or more buttons and one or more touch detection units. Further, the input unit 630 may comprise an interface to which external devices may connect to.

The apparatus 600 also comprises, optionally, an output unit 640. The output unit comprises or is connected to one or more displays capable of rendering visual content. The output unit 640 may further comprise one or more audio outputs. The one or more audio outputs may be for example loudspeakers or a set of headphones.

The apparatus 600 may further comprise, optionally, a connectivity unit 650. The connectivity unit 650 enables wired and/or wireless connectivity to external networks. The connectivity unit 650 may comprise one or more antennas and one or more receivers that may be integrated to the apparatus 600 or the apparatus 600 may be connected to. The connectivity unit 650 may comprise an integrated circuit or a set of integrated circuits that provide the wireless communication capability for the apparatus 600. Alternatively, the wireless connectivity may be a hardwired application specific integrated circuit, ASIC.

It is to be noted that the apparatus 600 may further comprise various components not illustrated in the FIG. 6. The various components may be hardware components and/or software components.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. An apparatus for monitoring an underground working area, wherein one or more mining vehicles are operational within the underground working area, the apparatus comprising at least one processor, and at least one memory including a computer program code, wherein the at least one memory and the computer program code are configured, with the at least one processor, to cause the apparatus to:
receive a first indication from at least one of the one or more mining vehicles operational within the underground working area, wherein the first indication provides information regarding an object hindering operation of the one or more mining vehicles operational within the underground working area, the object having its current location within the underground working area;
determine further information relating to the object, the further information comprising at least the current location of the object;
provide a second indication to the one or more mining vehicles operational within the underground working area, wherein the second indication comprises information regarding the current location of the object; and
receive, from a mining vehicle, comprised in the one or more mining vehicles operational within the underground working area, a third indication, wherein the third indication provides information regarding the mining vehicle being capable of removing the object from its current location.

2. An apparatus according to claim 1, wherein the at least one memory and the computer program code are further configured, with the at least one processor, to cause the apparatus to:
receive data from a camera and/or three-dimensional sensing along with the first indication, wherein the data is associated with the object located at the current location.

3. An apparatus according to claim 1 or 2, wherein the third indication comprises a request for an acceptance for the mining vehicle to perform an action with respect to the mining vehicle being capable of removing the object from its current location.

4. An apparatus according to claim 3, wherein the at least one memory and the computer program code are further configured, with the at least one processor, to cause the apparatus to:
determine, in response to receiving the request, that the mining vehicle is allowed to remove the object from its current location; and
provide a fourth indication to the mining vehicle, wherein the fourth indication comprises the acceptance that the work machine is allowed to remove the object from its current location.

5. An apparatus according to any previous claim, wherein determining the information relating to the object comprises updating a map of the underground working area based on the information relating to the object.

6. An apparatus according to any previous claim, wherein the information relating to the object further comprises a classification determined for the object.

7. An apparatus for operating a mining vehicle within an underground working area, wherein the underground working area is monitored by a monitoring system, the apparatus comprising at least one processor, and at least one memory including a computer program code, wherein the at least one memory and the computer program code are configured, with the at least one processor, to cause the apparatus to:
receive a fifth indication, wherein the fifth indication provides information regarding an object hindering operation of the one or more mining vehicles operational within the underground working area, the object being located within the underground working area;
receive further information regarding the object, the further information comprising at least the current location of the object;
determine, based at least partly on the current location of the object, that the mining vehicle is capable of removing the object from its current location;
provide a sixth indication to the monitoring system, wherein the sixth indication provides information regarding the mining vehicle being capable of removing the object from its current location; and
perform removal of the object from its current location.

8. An apparatus according to claim 7, wherein the sixth indication further comprises a request for receiving an acceptance, from the monitoring system, to remove the object from its current location and the removal of the object from its current location is performed in response to receiving the acceptance.

9. An apparatus according to claim 7 or 8, wherein the fifth indication is received from another mining vehicle or from the monitoring system.

10. An apparatus according to any of claims 7 to 9, wherein the fifth indication comprises an updated map of the underground working area.

11. An apparatus according to any of claims 7 to 10, wherein the current location of the object is within an operating area associated with the mining vehicle.

12. A method comprising:
receiving a first indication from at least one of the one or more mining vehicles operational within the underground working area, wherein the first indication provides information regarding an object hindering operation of the one or more mining vehicles operational within the underground working area, the object having its current location within the underground working area;
determining further information relating to the object, the further information comprising at least the current location of the object;
providing a second indication to the one or more mining vehicles operational within the underground working area, wherein the second indication comprises information regarding the current location of the object; and
receiving, from a mining vehicle, comprised in the one or more mining vehicles operational within the underground working area, a third indication, wherein the third indication provides information regarding the mining vehicle being capable of removing the object from its current location.

13. A method comprising:
receiving a fifth indication, wherein the fifth indication provides information regarding an object hindering operation of the one or more mining vehicles operational within the underground working area, the object being located within the underground working area;
receiving further information regarding the object, the further information comprising at least the current location of the object;
determining, based at least partly on the current location of the object, that the mining vehicle is capable of removing the object from its current location;
providing a sixth indication to the monitoring system, wherein the sixth indication provides information regarding the mining vehicle being capable of removing the object from its current location; and
performing removal of the object from its current location.

14. A computer program comprising instructions for causing an apparatus to perform at least the following:
receive a first indication from at least one of the one or more mining vehicles operational within the underground working area, wherein the first indication provides information regarding an object hindering operation of the one or more mining vehicles operational within the underground working area, the object having its current location within the underground working area;
determine further information relating to the object, the further information comprising at least the current location of the object;
provide a second indication to the one or more mining vehicles operational within the underground working area, wherein the second indication comprises information regarding the current location of the object; and
receive, from a mining vehicle, comprised in the one or more mining vehicles operational within the underground working area, a third indication, wherein the third indication provides information regarding the mining vehicle being capable of removing the object from its current location.

15. A computer program comprising instructions for causing an apparatus to perform at least the following:
receive a fifth indication, wherein the fifth indication provides information regarding an object hindering operation of the one or more mining vehicles operational within the underground working area, the object being located within the underground working area;
receive further information regarding the object, the further information comprising at least the current location of the object;
determine, based at least partly on the current location of the object, that the mining vehicle is capable of removing the object from its current location;
provide a sixth indication to the monitoring system, wherein the sixth indication provides information regarding the mining vehicle being capable of removing the object from its current location; and
perform removal of the object from its current location.
